# EUROPEAN PATENT APPLICATION

(11) **EP 3 657 373 A1**
(43) Date of publication of application: **27.05.2020**
(21) Application number: 18382834.2
(22) Date of filing: 20.11.2018
(51) Int. Cl.: G06F 21/55, H04L 29/06

(54) **METHOD AND SYSTEM FOR SECURING ROBOTIC SYSTEMS**

(71) Applicant: Alias Robotics, S.L., 01006 Vitoria-Gasteiz (ES)
(72) Inventor: GIL URIARTE, ENDIKA, 01006 VITORIA-GASTEIZ (ES); AYÚCAR CARBAJO, UNAI, 01006 VITORIA-GASTEIZ (ES); JARAS VILLAR, RAÚL, 01006 VITORIA-GASTEIZ (ES); MAYORAL VILCHES, VÍCTOR, 01006 VITORIA-GASTEIZ (ES); MUÑIZ ROSAS, ADAY, 01006 VITORIA-GASTEIZ (ES); ZAMALLOA UGARTE, IRATI, 01006 VITORIA-GASTEIZ (ES)
(74) Representative: Pons Ariño, Angel

(57) **Abstract**

The present invention provides a method and system for securing robotic systems. Embodiments of the present invention may include the employment of improved bio-inspired techniques for protecting the network-level communications of a given robotic system. The invention further provides different means of response against the detection of illegitimate traffic. The method and system may be implemented in robotic systems and devices of any kind.

## Description

### Technical Field

The present invention relates to the field of robot security and more specifically to a biologically-inspired method and system for protecting and storing network-level communications within a robotic system.

### Background Art

As robots are becoming mainstream and one of the most important cultural paradigms of the current technological era, new methods and approaches aimed at granting their security must inevitably be developed in parallel. As cutting-edge technology, robots are expensive to produce and get, complex to maintain and hard to replace. Most industries employing robots cannot afford them to break nor even a temporary outage or inactivity of such working tools. Menaces may not solely restrict to industrial robots but also apply to other areas such as professional robots, military robotics or consumer robots. On the other hand, while people and robots increasingly become workmates, or otherwise while robots enter everyone's houses to undertake, for example, household tasks; or simply are brought to the streets and shops to deploy different labors, the physical integrity of humans and the field that manages with it (commonly known as safety) may also be jeopardized by insecure settings.

Traditionally, robotic software and hardware have not been designed in a security-conscious way. This scenario is now starting to reveal major system vulnerabilities, most of which remain, to date, unknown and may potentially lead to large-scale system failures that may cause billions of losses for the industries and professionals concerned. Given this scenario, it is essential to provide for integrative solutions aiming at protecting robotic systems as a critical element to grant security for such valuable assets. Although the potential attack surface of a robot may vary from case to case, there is consensus (VILCHES, V. M. et al. 2018. Introducing the Robot Security Framework (RSF), a standardized methodology to perform security assessments in robotics. arXiv preprint arXiv: 1806.04042) that most attack surfaces can be represented by four main layers: physical layer, network layer, firmware layer and application layer. Each layer may comprise major relevant aspects that need to be taken into account in order to realize a security assessment. However, most of modern cybersecurity breaches are network-based attacks, which exploit vulnerabilities related to robot internal and external networks.

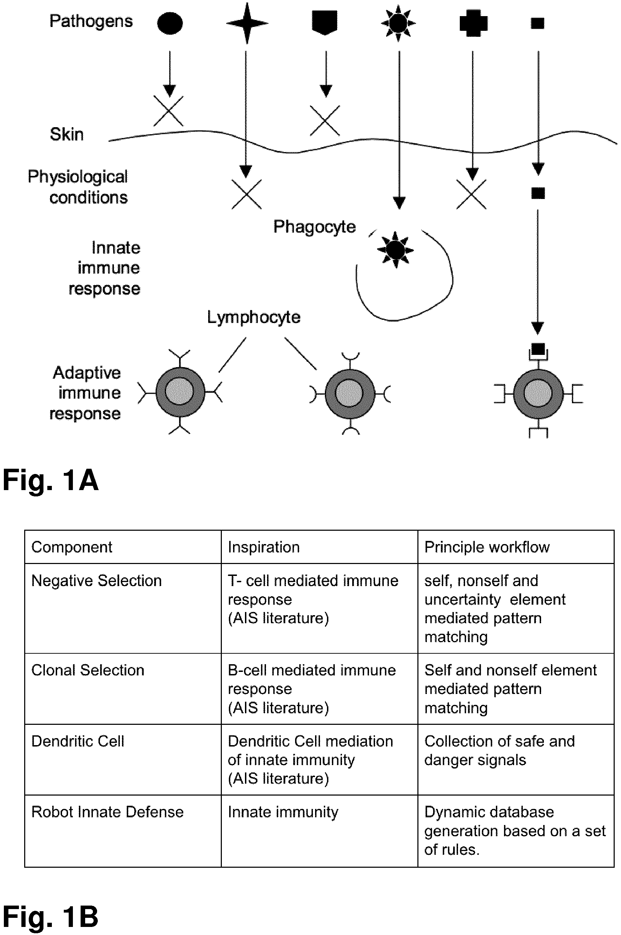

There are already provided in the state of the art approaches that take inspiration from the characteristics of the Human Immune System (HIS) to develop Artificial Intelligence based defensive methods for different kinds of systems, but no yet for robotic systems. The HIS is a multilayered biological system that provides human beings with varied mechanisms of resilience towards a set of possible intrusions. Such system is formed by an array of superposed defensive layers that act sequentially in a coordinated manner. Representations, such as the provided by Figure 1A (L. de Castro and F. von Zuben, Tech Rep, 1999), provide the architecture of the HIS by illustrating different pathogenic insults to a host, thereby triggering distinct immune-responses.

From top to bottom, the HIS can be explained as follows: firstly, the HIS is equipped with physical and chemical barriers, such as the skin or the mucus, that provide primary barriers for infective agents. Secondly, the presence of the innate immune system provides the host with specific cellular types that perform a constant non-specific defensive action and serve for ulterior adaptive responses. Finally, highly specific cellular functions, such as B-cell-mediated antibody generation or T- cell-based cytotoxic responses, are triggered by the adaptive immune system. Such array of concatenated actions tackles and neutralize specific pathogens on the basis of previous exposure and specific action modes, so that harm to the host is prevented on future occurrences. Thus, immune inspiration may provide a powerful tool for robot security approaches as well.

As aforementioned, there are different biological response methods within the HIS, exerted by different biological entities. In immunological terms, the biological response to threats is a well-structured and well-defined process comprising exposure to a first innate immune function (primarily involving non-specific responses such as macrophages and dendritic cell activation) and exposure to a secondary adaptive immune response, such as antibody neutralization or cellular cytotoxic responses. Major developments in the field of Artificial Immune Systems (AIS) have performed substantial progress around some immune principles, such as the Negative Selection Principle, the Clonal Selection principle and Dendritic Cell Principle.

As for the prior art related to patent literature known at the moment of the application and regarded as useful for a better understanding of the invention, brief references to following documents are provided: US20170286708A1, US20180077194A1, US20170289183A1, US20170126704A1, CN107491696A and US8621631B2.

US20170286708A1 discloses a robot with security concerns that, whether realized or not, turn out in barriers to acceptance. Should the robot be in compliance with such concerns, it is allowed to operate in a secure mode, being its data transmissions or access to information blocked when not. However, it is important to provide a method and system that works regardless of the specific security concerns with which a specific robot may have been furnished.

Other documents such as US20180077194A1 or US20170289183A1 provide methods and strategies for preventing harm in devices working in the so-called Internet of Things (loT) by assessing vulnerabilities present in other devices. Also oriented to the loT, US20170126704A1 present a set of method and devices for monitoring outputs of temperature sensors that, when compared to a profile of temperatures associated with normal operation of a computer device, allows to identify unusual operation of such.

As for the immunological approach, there are a few inventions disclosed that make use of techniques and methods inspired by the HIS for security purposes. Yet not directly applied to robots, CN107491696A discloses a software security analysis method and system based on an immune model. According to this method, a feature sampling on the runtime of the normal system and software is performed in order to extract a self-feature library so that, based on such, an antibody library according to the negative selection principle of artificial immunity may be generated. In addition to the different invention's standpoint, the cited document does not cover other possibilities that immune models provide, besides the negative selection principle.

On the other hand, US8621631B2 claims to provide a method for evolving detectors to detect malign behavior in an artificial immune system by extending the negative selection principle. However, artificial immune systems are not to be mere abstract frameworks or inspiration to work with, but extremely powerful solutions that shall be improved in a specific technical way.

### Summary of invention

A method for providing a security add-on for robots at the network level is provided. The disclosed method is aimed at improving network-level security aspects with an immune-inspired approach by taking as a reference model the Human Immune System (HIS). Therefore, the embodiment of a biologically-inspired immune method for protecting network-level communications within a robotic system is provided.

According to this method, a flexible security architecture may be integrated as a partaking element in any of the network communication flows that may relate to a given robotic system, that is, external communications as well as communications between other components of the system. The security-providing element may be configured in the form of an "immune flow", according to different embodiments disclosed herein and the requirements of particular robots and robot components.

While resorting to principles related to the HIS, the present invention provides an extrapolation of capacities of said system in an unstructured manner in order to provide a given robotic system with a fully interconfigurable immune response capacity, embodied in different immune routes or paths, called immune flows. In some embodiments, the disclosed method presents immune flows that may be the result of the additive use and harmonization of different capacities of a series of immunological principles, as described herein. Some other bioinspired techniques such as the Artificial Neural Networks (ANNs) may use this same principle of additive nodes to generate classifications, for example over complex data patterns for image classification. However, the method of the present invention diverges substantially from ANNs since immune flows may provide enhanced evolutionary and interconnection capacity.

Hence, the method of the present invention may be entitled to act as a robotic transduction of the HIS and provide for the development of protection capacities for a robotic system (i.e. a robot apparatus or component) of any type, thereby building a so-called Robot Immune System (RIS) as successively described in an array of aspects to be specifically addressed in the subsequent description, some of them:
- Configuration of a desired immune architecture comprising an array of immune principles that, when acting in an orchestrated manner, constitute immune-flows that provide a robotic system with security at network level.
- Placement of one or more immune-flows on one or more interfaces of the network-level communications in order to provide an inspection of any network package running on the interface.
- Optionally, configuration of the system employing previously available information (in some embodiments, in the form of an immune-flow) about known threats for a given robotic system.
- Training of the system in a secure mode, thereby using its own activity on a reference set up (in some embodiments, the reference set up may be either a WLAN or a VPN secured traffic) and generation of a transduction of traffic into memory.
- Storage of all or parts of the incoming traffic for forensic purposes. In some embodiments, the traffic may be stored in a compressed manner so that its retrieval is possible after decompression operations.
- Providing a means for a real-time evaluation of anomalies.
- Development of recursive updates on the trained memory transduction and creation of white type lists and black type lists for further optimized configurations of the system. In some embodiments, updates may be provided by a cloud-based database.
- Counteract the detected anomalies through different response means. Examples of such may include, by way of example and not limitation, notification, network package rejection, termination of communications before harm or other means, according to the particular embodiment.

### Brief description of drawings

To complement the description that is being made and to aid towards a better understanding of the characteristics of the present invention, in accordance with a preferred example of practical embodiment thereof, a set of drawings is attached as an integral part of said description wherein, with illustrative and non-limiting character, the following has been represented:
Figure 1A shows the usual layered structure of the Human Immune System (HIS).
Figure 1B is a description of different immune defense techniques.
Figure 2 is a flowchart comprising an overall integration and architectural elements of the robot immune system using an immune flow within a robot network interface.
Figure 2A is a representation of the Clonal Selection principle.
Figure 2B is a representation of the Negative Selection principle.
Figure 2C is a representation of the Dendritic Cell principle.
Figure 2D is a representation of the Robot Innate Defense.
Figure 3 shows an exemplary embodiment of an immune flow.
Figure 4 is an exemplary embodiment of an immune flow setup.

### Description of embodiments

Embodiments of the present invention may relate to different apparatuses comprising systems furnished with one or more processors as well as storage media further comprising computer instructions that are executed in said processors, so that certain operations may be deployed according to the method disclosed hereinafter. Concretely, the disclosed method may be deployed in robotic systems, which may include a complete robot or be embedded into individual robot components, such as sensors or actuators. Systems where the present invention may be implemented may share all or some of the following characteristics:
- Be furnished with at least one central processing unit (CPU) and at least one Field Gate Programmable Array (FPGA) that ensures secure and safe distributed operations as to provide capabilities, also real-time capabilities, to accelerate the immune-flow computations.
- Feature one or more mechanisms for storage that may be referred to as secondary memory, which is connected to the CPU and may be typically implemented through Flash Memory technology.
- Feature at least two network interfaces, thereby they may expose a plurality of gates for threats, besides the communication buses, including sensors, telemetry, Ethernet, EtherCAT, PROFINET, TSN, CAN and other network-level databuses. Ultimately, they may be furnished with at least two networking interfaces: a primary one, used for receiving incoming traffic, and a secondary one, used for granting access and forwarding appropriately tagged traffic. In some embodiments, the operation of these two interfaces may be reversed.
- Eventually, systems may make use of external or internal robot networks typically ruled by so-called robotic middlewares such as the Robot Operating System (ROS), ROS 2.0 or YARP, among others.
- Eventually, they may include a Graphical User Interface (GUI) through which users may access and modulate the requirement settings to be deployed throughout this method and provides a graphic visualization means.
- Be implemented in a dedicated device or embedded profile that may be attached to any kind of robot or individual robot component. Examples of robots may include industrial articulated robot manipulators or mobile bases, among others.

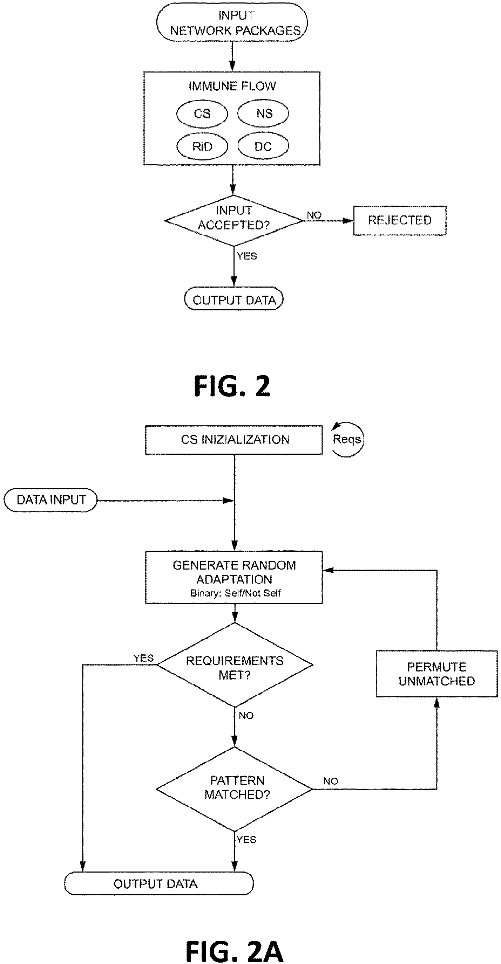

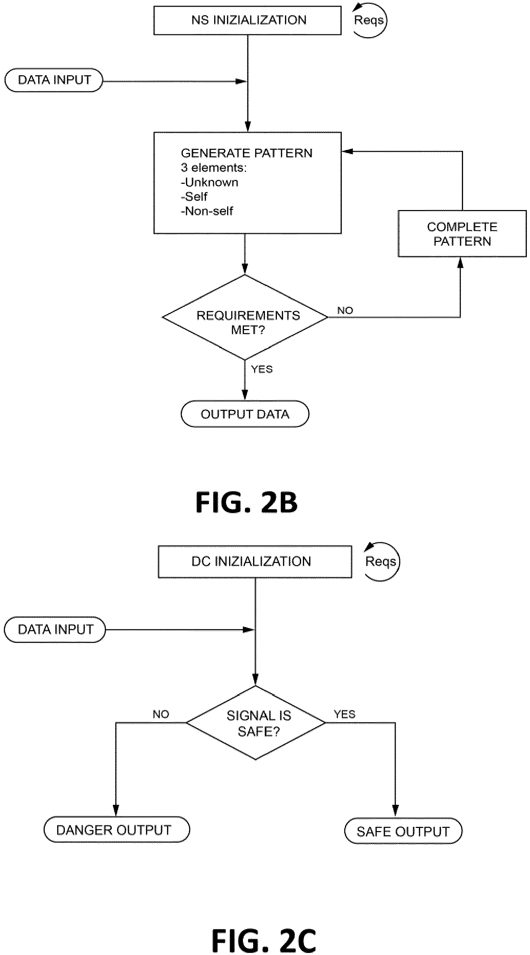

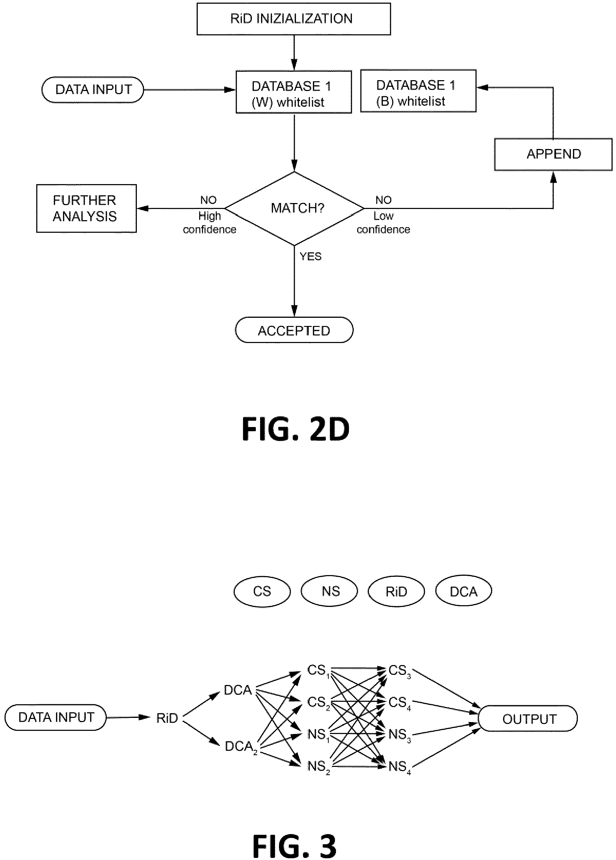

To facilitate the understanding of those skilled in the art that may implement this invention, techniques and principles employed by the disclosed method for securing robotic systems are described hereinafter. In some embodiments, so-called immune flows may be configured and implemented in the system. The immune flow is a bioinspired technique that allows for the generation of customizable adaptive nodes for providing security by means of combination of the different capacities of a series of immune principles. Generally, each generated node may comprise one or more immunological principles (also called immune-response techniques) and be placed at the interface of a network-level traffic flux, as schematically shown in Figure 2. Figure 2 depicts an incoming network data stream formed by network packages flowing towards an exemplary immune flow setting formed by an array of principles. Subsequently, outbound data may be processed, judged and classified. Accepted data may be derived towards the secured robotic setting whereas anomalous data may be rejected by the immune flow.

Developments in the field of Artificial Immune Systems (AIS) have performed substantial progress around some immune principles such as the Negative Selection Principle, the Clonal Selection principle and Dendritic Cell Principle, as shown in Figure 1B. However, some other principles employed by the disclosed method, such as the Robot Innate Defense principle, have not been conceived before. Therefore, any exemplary immune flow may include a combination of the following he immune-response techniques: the Dendritic Cell (DC) principle, the Negative Selection (NS) principle and the Clonal Selection (CS) principle. Additionally, the disclosed method provides a principle inspired after the immune system innate function, "Robot Innate Defense" that performs a dynamic generation of rules. Specifically, a pseudocode of said principle is hereby provided as follows:

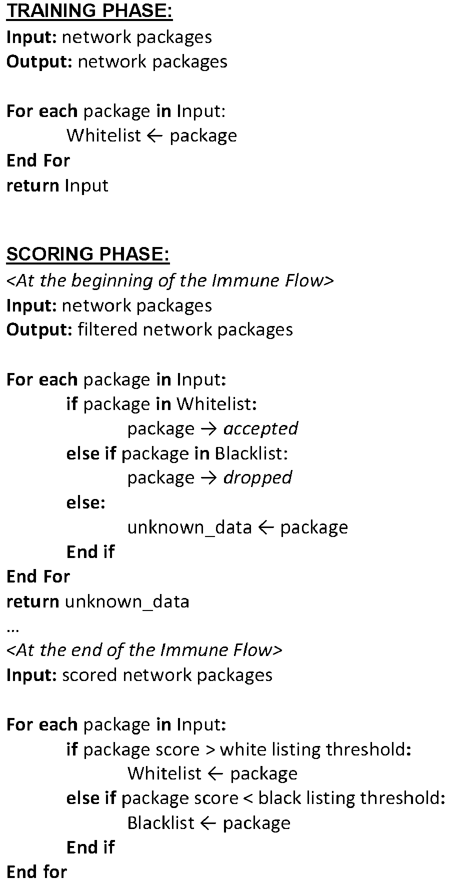

The specific workflow of the aforementioned principles is individually depicted in Figures 2A to 2D. The CS and NS principles may perform iterative pattern-matching strategies, whereas DC may act as an adaptive filter whereas RID may engulf a dynamically generated framework for adaptive machine learning that may comprise the generation of benign and malicious traffic samples. The described principles are conceived to be compatible and fully interconfigurable in any form and with any requirement settings as each unit of said principles may act as a discrete operant agent that performs certain workflows within a common framework (the given immune flow) whereas each principle may be considered a single mathematical operator with singular mathematical actions.

Inputs for an immune-response technique may be either an inbound network package or an immune principle representation, however, the output may be a coherent immune representation abstraction. The principles may thereby be chained, repurposed and linked each other as the output of one may be considered an input for the following principle, thereby configuring an immune flow. Inputs and outputs of the immune flow may also be represented by a data structure that extends a network package with a set of given metadata (e.g. principles in use, requirements in use) derived from an immune flow that extend the internal cohesion of the network package processing. Even if these principles may operate in different contexts or under different configurations, the immune flow framework is aimed to provide a coherent output that allows for unrestricted interconnection.

Therefore, the immune flow may provide a comprehensive architecture that exploits and adapts the operation of each principle in order to obtain a degenerate immune representation of a single network package or selected several network packages that may be fed into the next principle. Specific representations may be generated during a training phase where the described chained methodology is aimed to generate and enable a generalization of network package traffic for the production of a representative memory. Further deployments of the system following a training phase may result in an evaluation of network traffic by which a differentiation between "normal" and "anomalous" traffic may be provided. In some embodiments, trained monitoring nodes may be able to extend the generated knowledge by developing certain means during the evaluation period. Consequently, a representative training sample entitled into an immune flow may act as an inducing agent to trigger adequate memory events that allow for generalization of network traffic within normal settings. Those skilled in the art may easily interpret that the method disclosed herein might be regarded as an evolutionary counterpart to knowledge generation in Artificial Neural Networks (ANNs). However, mathematical immunological implications of immune-flow extend far beyond the plain biological inspiration within ANNs.

In some embodiments, all or part of the output of the immune-flow may optionally be encrypted and stored, so that selected information may then be used for future digital analytics such as forensic procedures for the robotic system. Examples of desirable saved features may include the recording of incoming logs to the robot, states of a given sensor, cognition states or memory usage, among others.

In an aspect of this method schematically shown in Figure 2, inbound network packages or inputs may be adequately processed and transferred to a preferred immune-flow process. As described above, resulting data modifications may entail surrounding the data of the package itself with some basic descriptors (e.g. metadata), what allows to record the immune status of the package (e.g. the number of iterations it has gone through or other means for visualization). Subsequently, packages may be exposed to the action of the different immune principles, as represented in figures 2A to 2D. Therefore, an appropriate combination of immune principles may be chosen and the system initialized by using, if required, available security databases containing generated legitimate and illegitimate traffic sources.

The disclosed method provides a fully interconfigurable mathematical framework that may be valid to analyze data streams at data-package level, this is to say, provide a full inspection of network packages through particular immune flows. A particular example of an immune flow comprising an array of principles with particular settings is schematically represented in Figure 3, where immune flows are depicted by chaining principles each other with arrows. Concretely, and by way of example and not limitation, Figure 3 displays a network data input, followed by two dissimilar RID principles that are followed by different DC, NS and CS principle settings that may be chained according to user requirements. The output of an immune flow may thereby be a selected classification of input data. Therefore, a given immune flow may comprise the complete route from input data to output data, including the discrete mathematical operations of the immune principles therein. In some embodiments, the described processes may be accelerated by means of dedicated hardware such as an FPGA, so that process computation and data analysis may be handled in parallel by different processing units (e.g. in distributed systems such as robotic modular systems).

In some embodiments, if a given system has been provided with data on illegitimate traffic, said system may natively be able to detect and block some preset menaces as long as they have ever been tagged as such, acting as a predefined set of defensive rules. Under some circumstances, an update for a given set of threats, which may be particular for each deployment or robot, may be optional to the immune-flow database. This update may be performed by using different means (e.g. cloud connection, server connection, updates downloading, etc.).

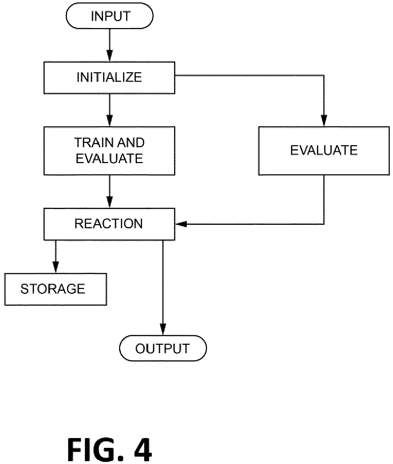

In other aspect of the invention schematically represented in Figure 4, after the system is initialized, the system may undergo a training phase in a secure mode of communications whereas the incoming traffic may be assumed to be trustable. This may allow the system to develop a comprehensive memory on usual, thereby own activity. For that purpose, the system initializes one or more immune flows. As aforementioned, the immune-flow may be the result of the chaining of a series of state-of-art immune principles such as NS, DC, CS or RID. Depending of the system and the network interface to which the immune-flow may be intended, the deployment of the immune-flow may require a variable secure deployment time in order to gain comprehensive knowledge of usual and secure communication features within the system. Since knowledge is generated on the basis of processed network traffic, an exposure to a sufficient amount of usual traffic may need to be undergone. Therefore, a robot that performs a very repetitive short task over great periods may need to be trained for a smaller amount of time than an aerial robot that may be performing varied missions on the field. Another example may include a robotic manipulator connected to a variety of destinations that receives network traffic from different sources.

One of the advantages of the present invention is that it may provide a method for immunological memory degeneracy as means of generalization or flexibilization towards positive recognition of unknown incoming traffic. Hence, while the disclosed method may imply imperfect knowledge generation, it may ultimately allow for a generalization of the created knowledge further built upon the interaction of the distinct operation workflows of the principles described above. In other words, it may create a reduced version or dimension of whole network packages, that may be understandable to certain extent among principles. According to this, the immune-flow may be able to capture the relevant mathematical features of a flow of network traffic, thereafter providing a representation that may enable further generalization towards future, not yet happened, traffic flows. Mathematical features may include package size, package features (protocol, destination IP, origin IP, etc.) or rates of package capture that may be fed to the principles. Therefore, following chained principles may be fed with a requirement setting. The stricter the requirement settings introduced in the principles, the sturdier memory may be generated. However, too sturdy memory may lack capacity for further generalization of new network packages, thereby tending towards the generation of false positives in subsequent phases.

As a result of the previous phases, the system may be capable to undergo an evaluation of all inbound traffic, now outside of a training phase. The traffic may be later classified according to open similarity criteria (e.g. binary hamming distance to an immune flow) and scored for each element integrated into the immune flow. The highest the scoring value, the highest the confidence for a given element to be similar to the generated memory. Thereafter a joint judgement may be emitted, said judgement setting the network package to rejection from or acceptance into the system according to flexible confidence settings.

Knowledge generalization may be achieved thanks to the accumulated and retained memory throughout one or more immune-flows. Knowledge containers within immune flows may act in combination with optional information stored in dedicated immune-flow responsive databases, that may resemble whitelists and blacklists that are dynamically generated during the training phase as to optimize further evaluation processes. For instance, a system equipped with RID principle followed by a pattern matching principle (e.g. NS or CS) may be able to discern normal from anomalous, unknown, and known traffic within the robot and evaluate, classify and learn from traffic patterns by virtue of the principle workflows.

Similarly to the embodiment described for the training phase, during the deployment all network traffic is analyzed without exception by comparing all incoming packages with previously trained immune-flow memory and scoring said packages on the basis of similarity. As a result, and depending on the amount of memory generated during the training phase, as well as the potentially available databases stored by means of RID principles, the sensibility of the system is aimed at discerning anomalous traffic from the rest, basing on the knowledge memory constructed by the combination of databases and retained memory within the immune-flow principles. The result of the evaluation phase may also be fed into the following phases of the method.

Another option provided by the immune flow is its capacity for repurposing the acquired knowledge for other use cases, also referred to as "knowledge sharing". Knowledge sharing implies the capability of reusing the memory retained in databases and within the immune-flow principles for securing other, potentially different, robotic systems in a dynamic manner (e.g. via a dedicated cloud service).

In another aspect of the invention, and in the event that a threat or an anomaly is detected, the system may be configured to provide a reaction phase for generating a response consisting in arresting, isolating and/or rejecting the detected anomalous network packages and its origin through different response means such as notification, termination of communications (by using specially crafted packages), network isolation (by means of interface disconnection) before harm is produced, or other means, according to the framework of deployment.

In a preferred embodiment, a robotic system powered by the Robot Operating System may be provided and responses may include: a) shutdown of single nodes by producing specially crafted packages (i.e. with particular network level properties in ROS) that results into a kind of Denial of Service, or b) isolation of individual publishers or subscribers from the rest of the network by means of false data injection. Other examples may consider: 1) the generation of a "stealth publisher attack" which consists of injecting false data into a running ROS application so that another ROS node is tricked into consuming data from a false publisher, 2) constructing a "person-in-the-middle" attacks targeted at actions within ROS by using a combination of "stealth publisher attacks", or 3) ROS service isolation attacks by tricking the centralized orchestration of ROS to stop attending a particular client. In addition to these response capabilities and as part of the reaction phase, some principles within the system may develop successive updates on its memory and may create databases resembling whitelists and blacklists that allow for further improvements of configurations for the system, so that it may be able to recognize a higher amount of preset threats without having to resort to further training phases. Following, the incoming flow of network traffic may be treated appropriately and sent to the output block to be sent to the robot.

In some embodiments, the system may be configured to save incoming traffic, totally or partially, in secondary memory resembling a robot or a robot component dedicated "blackbox", so that snapshot of communications occurring at memory level (e.g. RAM memory) may be stored. Accordingly, a full copy of memory usage may be executed on the physical memory. Such storage phase may be securely performed by executing cryptographic operations to ensure confidentiality, integrity and authenticity of the data.

A last aspect of the disclosed method may refer to the output phase, as shown in Figure 4, and comprise the combination of all resulting traffic tagged according to the immune-flow. Traffic that, according to the method disclosed, represents a threat for the system may be discarded whereas the rest is forwarded to the robot network through its secondary networking interface.

The present invention may be deployed in different types of network aspects or settings. For example, it may be deployed into different external or internal robot networks (e.g.: the sensors network and the actuation framework, in the robot middleware, etc.) through a variety of network interfaces and protocols that may include Wi-Fi, Ethernet, 3G, 4G, EtherCAT, TSN, Profinet or other robot-related databuses.

## Claims

1. A method for securing a robotic system **characterized in that** the communications of said system robotic system are protected at network level, the method further **characterized by** comprising the execution of computer instructions causing operations for the generation of one or more immune flows; the training of the one or more immune flows in secure mode by placing the one or more immune flows on one or more interfaces of the network-level communications of the robotic system during a given period of time; the generation of a transduction of usual traffic according to the results of the training; the storage of the transduction of usual traffic in system memory; the evaluation of inbound non-secure traffic by employing the one or more trained immune flows on one or more interfaces of the network-level communications of the robotic system; the generation of a reaction according to the result of the evaluation; and the storage of the generated immune memory.

2. The method for securing a robotic system according to claim 1, wherein the immune flow is **characterized by** comprising a customizable chained combination of one or more of following principles: the Dendritic Cell (DC) principle, the Negative Selection (NS) principle, the Clonal Selection (CS) principle and the Robot Innate Defense (RID) principle.

3. The method for securing a robotic system according to claims 1 and 2, wherein the Robot Innate Defense (RID) principle is the execution of computer instructions causing operations defined by:

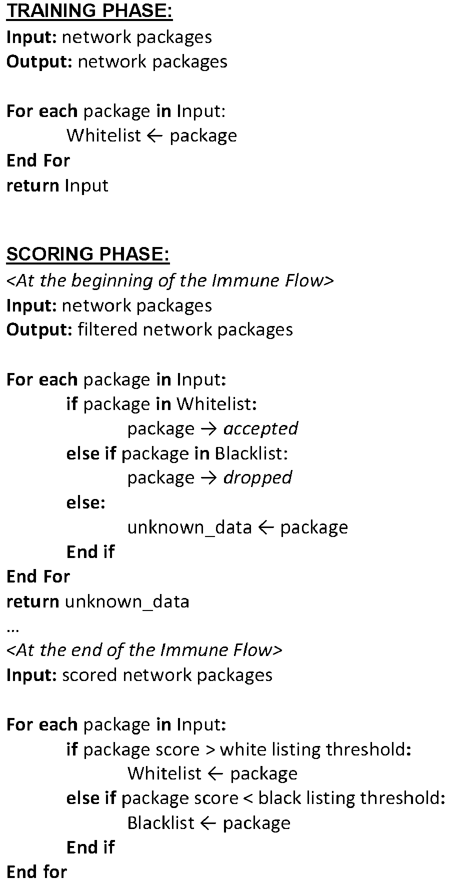

4. The method for securing a robotic system according to claim 1, wherein the generation of a reaction according to the result of the evaluation is **characterized by** comprising the acceptance of all or part of the inbound traffic.

5. The method for securing a robotic system according to claim 1, wherein the generation of a reaction according to the result of the evaluation is **characterized by** comprising the employment of one or more means of response against detected illegitimate traffic selected from: rejection of the traffic, shutdown of single nodes by producing specially crafted packages, isolation of individual publishers or subscribers from the rest of the network by means of false data injection, the generation of a stealth publisher attack, constructing a person-in-the-middle attack, service isolation attack, generation of whitelists, generation of blacklists and a combination of one or more of the previous means of response.

6. The method for securing a robotic system according to claim 1, wherein the storage of the generated immune memory is **characterized by** comprising a blackbox including snapshots of communications occurring at RAM memory level are stored, wherein copy of memory usage is stored to be executed on the physical memory.

7. A system for securing a robotic system **characterized in that** the communications of said system robotic system are protected at network level, the system **characterized by** comprising dedicated hardware, wherein the hardware further includes at least one CPU for operating computer instructions, at least one FPGA for accelerated computation, secondary memory and flash memory for storing instructions; and dedicated software wherein the software further includes the execution of the computer instructions that, when the system is initialized, cause operations **characterized by** comprising the generation of one or more immune flows; the training of the one or more immune flows in secure mode by placing the one or more immune flows on one or more interfaces of the network-level communications of the robotic system during a given period of time; the generation of a transduction of usual traffic according to the results of the training; the storage of the transduction of usual traffic in system memory; the evaluation of inbound non-secure traffic by employing the one or more trained immune flows on one or more interfaces of the network-level communications of the robotic system; the generation of a reaction according to the result of the evaluation; and the storage of the generated immune memory.

8. The system for securing a robotic system according to claim 7, wherein the immune flow is **characterized by** comprising a customizable chained combination of one or more of following principles: the Dendritic Cell (DC) principle, the Negative Selection (NS) principle, the Clonal Selection (CS) principle and the Robot Innate Defense (RID) principle.

9. The system for securing a robotic system according to claim 7, wherein the generation of a reaction according to the result of the evaluation is **characterized by** comprising the acceptance of all or part of the inbound traffic.

10. The system for securing a robotic system according to claim 7, wherein the generation of a reaction according to the result of the evaluation is **characterized by** comprising the employment of one or more means of response against detected illegitimate traffic selected from: rejection of the traffic, shutdown of single nodes by producing specially crafted packages, isolation of individual publishers or subscribers from the rest of the network by means of false data injection, the generation of a stealth publisher attack, constructing a person-in-the-middle attack, service isolation attack, generation of whitelists, generation of blacklists and a combination of one or more of the previous means of response.

11. The system for securing a robotic system according to claim 7, wherein the storage of the generated immune memory is **characterized by** comprising a blackbox including snapshots of communications occurring at RAM memory level are stored, wherein copy of memory usage is stored to be executed on the physical memory.

12. The system for securing a robotic system according to claims 7 to 11, wherein the system is implemented in a robotic device.

13. The system for securing a robotic system according to claims 7 to 11, wherein the system is implemented in a dedicated device further attached to a robotic device.
